# EUROPEAN PATENT SPECIFICATION

(11) **EP 3 357 326 B1**
(45) Date of publication and mention of the grant of the patent: **07.04.2021**
(21) Application number: 17154239.2
(22) Date of filing: 01.02.2017
(51) Int. Cl.: A01D 90/12, A01C 15/00

(54) **A POWERED SHEET COVER APPARATUS FOR A LOAD SPACE OF AN AGRICULTURAL MACHINE AND AN AGRICULTURAL MACHINE**
ANGETRIEBENE FOLIENABDECKUNGSVORRICHTUNG EINES LADERAUMS EINER LANDWIRTSCHAFTLICHEN MASCHINE UND EINE LANDWIRTSCHAFTLICHE MASCHINE
APPAREIL DE COUVERTURE DE FEUILLE MOTORISÉ POUR UN ESPACE DE CHARGEMENT D'UNE MACHINE AGRICOLE ET MACHINE AGRICOLE

(43) Date of publication of application: 08.08.2018
(73) Proprietor: Kverneland Group Nieuw-Vennep BV, 2153 LR Nieuw-Vennep (NL)
(72) Inventor: van der Vlugt, Bart, 2135 HR Hoofdorp (NL)
(74) Representative: Bittner, Thomas L.

(56) References cited:
- CA-A1- 2 520 351
- DE-A1-102012 023 610
- DE-A1-102012 103 568
- GB-A- 2 401 087
- US-A1- 2014 145 466

## Description

The present disclosure refers to a powered sheet cover apparatus for a load space of an agricultural machine, and an agricultural machine.

### Background

A sheet cover apparatus may be applied for covering a top opening of a load space provided in a load container of an agricultural machine such as spreader, seeder, and loader wagon. The load container is to receive different kinds of material in the operation of the agricultural machine. The load space defined in the load container by a plurality of walls is to be covered or uncovered by a sheet cover. The sheet cover is received on support members which can be relocated for covering and uncovering the top opening of the load space by means of the sheet cover.

Sheet cover apparatuses operated manually or by a powered mechanism are known as such. Document DE 199 49 712 A1 discloses a cover element for a load container. The cover element is pivoted for opening and closing the opening of the load container for the agricultural machine such as a spreader or seeder.

Document EP 2 868 182 A1 refers to a spreader or seeder comprising a load container covered by a cover element pivotable received on the walls of the load container and movable by a powered driving device.

Document DE 10 2012 023 610 A1 refers to a device having an electrical propelled motor secured at a wrapped tube carrier at which a wrapped tube is rotatably supported. Resilient traction cables are wound on a guide device that is pivotally supported at a front wall of a loading tray. An unreeled roll tarpaulin is pulled and downward stressed held over an upper edge of long side of the loading tray. A clutch is rigidly connected with the wrapped tube and a non-rotatably secured stator of the motor in a motor pipe that is rigidly secured at the wrapped tube carrier.

Document DE 10 2012 103 568 A1 discloses a fastening device designed as double clamp, which is fixed to an upper edge area of a container in the area of container fill opening with an area of the double clamp, where supply or transferring lines are fixed to the storage container with another area. The double clamp has a bearing surface, which applies a covering device against the bearing surface. The supply or transferring lines are electrical or hydraulic lines. The double clamp has a receiving opening for receiving the lines.

Document US 2014/145466 A1 relates to a cover system for covering an open top of a container including a flexible cover, a bail member, a bow member, and a tension element. The cover has a first end connected to the container and is sized to cover the open top when a second end is in an extended position. The bail member has an end pivotally connected to the container and an end connected to the second end of the cover. The bail member pivots to deploy the cover into the extended position. The bow member includes an end pivotally connected to the bail member and an end configured to bear against the cover between the ends of the cover. The tension element is connected between the container and the bow member. The tension element applies a force to the bow member to apply a force against the cover.

Document GB 2 401 087 A discloses a load cover, particularly for a tipping lorry body. The cover comprises a flexible sheet and a deployment system. The deployment system is operable to move the cover from a deployed condition in which it covers a load container and a withdrawn condition in which it allows access to the load container. The deployment system comprises an arm for mounting on a vehicle to pivot about an axis longitudinal of the vehicle, a roller carried on the pivotable arm, and a drive mechanism carried on the pivotable arm. The drive mechanism operable to drive the roller for rotation. The sheet is secured to the roller and to a fixed part of the vehicle. The pivotable the arm is biassed by a spring to move the sheet towards the deployed position. Upon operation of the drive mechanism, the sheet is wound onto the roller and is thereby caused to withdraw from the load container.

Document CA 2 520 351 A1 pertains to a cover assembly adapted to be fitted over the open top of a bin including a pair of spaced apart, domed rigid hoods releasably attachable to upper portions of the hopper, whereby an elongated opening is defined between the hoods of sufficient width as to provide access to the hopper. A flexible closure member spans the opening between the hoods while supported on trackways extending along marginal edge portion s of the hoods which bound the elongated opening. A pair of rotatable rollers are attachable, one at each of the opposing end portions of the opening. One roller is spring-loaded, upon and from which roller the closure member is wound and unwound during travel of said closure member over the elongated opening. The other roller is connected by pull cables to the closure member, and powered to provide for travel of the closure member.

### Summary

It is an object of the present disclosure to provide an arrangement having a powered sheet cover apparatus and a load space for an agricultural machine and an agricultural machine which provide for secure and reliable covering and uncovering of an opening of the load space under field conditions.

For solving the problem, an arrangement having a powered sheet cover apparatus and a load space for an agricultural machine according to claim 1 is provided. Further, an agricultural machine according claim 14 is provided. Alternative embodiments are subject of the dependent claims.

According to one aspect, an arrangement having a powered sheet cover apparatus and a load space for an agricultural machine is provided. The apparatus comprises a load space defined in a load container by walls on opposing sides and walls on opposing end sides. A sheet cover is provided which is configured to cover a top opening of the load space. A first support member is connected to the sheet cover on a proximal side of the sheet cover and is extending essentially parallel to the walls on the opposing sides, wherein the first support member is provided in at least one fixed position with regard to an adjacent wall on one of the opposing sides of the load container. A second support member is connected to the sheet cover on a distal side of the sheet cover and is extending essentially parallel to the walls on the opposing sides. A support device is provided on the walls of the load container and connected to the second support member in such a way that the second support member is movable between the opposing sides for covering and uncovering the top opening by the sheet cover. The powered sheet cover apparatus comprises a powered driving device connected to a roll of the first support member in such a way that rotation of the roll causes the sheet cover to roll and unroll from the roll while the second support member is moving between the opposing sides for covering and uncovering the top opening, the powered driving device being provided with a driving motor received in an inner space of the roll.

According to another aspect, an agricultural machine is provided, the agricultural machine comprising an arrangement, wherein the agricultural machine is selected from the following group: spreader, seeder, and loader wagon.

The sheet cover may be moved between an open position in which the top opening of the load space is open in part or completely and a closed position in which the top opening is completely covered by the sheet cover.

The powered driving device provides for a non-manual mechanism for covering and uncovering the top opening by the sheet cover. The sheet cover may be provided by a sheet material such as a canvas.

The walls of the load container may be provided by a single container or a plurality of wall elements connected together for establishing the load container. For example, there may be a basic container element providing for a basic load space. On top of the basic container wall elements providing for the walls on opposing sides and the walls on opposing end sides of the sheet cover apparatus may be provided. For example, the walls of the sheet cover apparatus may be provided by a set top frame which may be releasable or non-releasable mounted on the basic container.

The support device may be connected to opposing ends of the second support member on the opposing sides. The second support member may be a hollow or solid bar member. The second support member may be rotatably or non-rotatably received on or connected to the support device. The support device is holding or supporting the second support member when the second support member is moved across the top opening for covering and uncovering the top opening by the sheet cover. A distance between the second support member and a surface across the top opening may be varying or changing when the second support member is moved between the opposing sides for covering and uncovering the top opening. For example, there may be a biggest distance when the second support member is in a middle section of a trajectory between the opposing sides. With regard to this or other embodiments, the second support member may be located on to a rim of the wall on the opposing side located adjacent to the second support member when the top opening is covered.

The support device may comprise a support arm connected to the second support member and pivotably received on the walls on the opposing end sides, the support arm being pivotable between an end positon in which the second support member is positioned on one of the opposing sides for uncovering the top opening cover and an opposing end position in which the second support member is positioned on the other one of the opposing sides for covering the top opening by the sheet cover. A single arm device may be provided on one or both of the opposing end sides. A pivot point of the support arm may be located essentially in the middle of the opposing end sides. The support arm may be an arm extendable and retractable, for example, for extending the length of the support arm while the second support member is moved between the opposing sides.

The sheet cover apparatus further comprises a biasing apparatus connected to the support device in such a way that a biasing force provided by the biasing apparatus is applied to the support device for biasing or preloading the support device against movement between the opposing sides. The biasing or preloading apparatus may bias or pretension the support device against movement from the side where the first support member is positioned to the opposing side and / or vice versa. With regard to this or alternative embodiments, the first support member may be provided in a fixed position with regard to an adjacent wall on one of the opposing sides of the load container. In an alternative embodiment, the first support member may be relocatable between a plurality of fixed positions.

The sheet cover apparatus may be configured to be opened in part manually by the user. Thereby, the user will be able to open the cover, for example, for inspection of the load space. For opening the user has to push against the biasing force.

The biasing apparatus may be connected to the support arm biasing or preloading the support arm against rotation for relocating the second support member into the end position for uncovering the top opening. The biasing or preloading provided by the biasing apparatus may ensure for keeping the sheet cover in a tight conditions while moving the second support member between the opposing sides for covering and uncovering the top opening.

The biasing apparatus may be free of a functional connection to the powered driving device. Thereby, the biasing apparatus and the powered driving device may be operated independently. Both elements, namely the biasing apparatus and the powered driving device applying some force to the cover sheet, can provide the respective function independently of each other, although, both are "acting on the sheet cover". As an alternative, there may be provided a control device functionally connected to both the biasing apparatus and the powered driving device in such a way that the biasing or preloading force and a driving force provided by the powered driving device are controlled in dependence on each other. For example, for different driving forces different biasing forces may be implemented by the controlling device.

The biasing force may be provided with an essential horizontal effective force direction. The biasing force may be provided as a tangential force to the pivotable support arm.

The biasing apparatus may be selected from the following group: mechanical biasing apparatus, hydraulic biasing apparatus, pneumatic biasing apparatus, and electrical biasing apparatus. For example, a spring mechanism and / or a hydraulic cylinder may be provided. With regard to the pneumatic biasing apparatus, a gas spring may be provided

The biasing apparatus may comprise a biasing element at least in part providing the biasing force extending in an essentially horizontal direction. For example, a spring providing the biasing force at least in part may be extending in an essentially horizontal direction. Similarly, a hydraulic cylinder may extend horizontally.

The biasing apparatus may be provided outside the load space. The biasing apparatus may be provided on an outer side of the walls on the opposing end sides. The complete biasing apparatus may be provided outside the load space, but supported on the load container walls.

The support device may be provided outside the load space. The support device, for example the support arm, may be provided on an outer side of the walls on the opposing end side. The complete support device may be provided outside the load space, but supported on the load container walls.

The sheet cover apparatus may further comprise a support section on the walls on the opposing end sides, the support section supporting the sheet cover when the sheet cover is covering the top opening of the load space. The support section may be provided on a top rim of the walls. The support section may comprise a bended section, for example, a bended wall section which may be a bended edge or rim. The bended section may be bended to the inside of the wall on the opposing end side.

The sheet cover may comprise one or more traversing support elements embedded in a sheet material. The one or more traversing support elements may comprise one or more bar elements made of metal fiber enforced material, wood and / or plastic. A traversing support element may be provided as a single element or a plurality of sub-support elements. The traversing support elements may extend essentially between the opposing end sides.

The sheet cover apparatus may further comprise a lock mechanism connected to the second support member in such a way that the second support member is secured at least in the opposing end position for covering the top opening. The lock mechanism may be connected to the second support member only when the second support member is in the opposing end position. As an alternative or in addition, the lock mechanism may secure the second support member in the end position for uncovering the top opening. Further, the lock mechanism may secure the second support member in further positions on the trajectory between the opposing sides. As an alternative or in addition, the lock mechanism may be applied to the support arm in such a way that the support is secured in different ration positions.

### Description of embodiments

Following, further embodiments are described by referring to figures. In the figures, show:
- Fig. 1: a schematic representation of an arrangement comprising a powered sheet cover apparatus for a load space of an agricultural machine with a second support member in a covering position;
- Fig. 2: a schematic representation of the arrangement from Fig. 1 after a covering process has started;
- Fig. 3: a schematic representation of the arrangement from Fig. 1 with the second support member in the covering position;
- Fig. 4: a perspective view of a part of the powered sheet cover apparatus in Fig. 2;
- Fig. 5: a schematic representation of a side view of the powered sheet cover apparatus in Fig. 2;
- Fig. 6: a schematic representation of a side view of the arrangement in Fig. 3;
- Fig. 7: a schematic representation of the arrangement in Fig. 2 in a side view with further details;
- Fig. 8: a schematic representation of the arrangement in Fig. 3 in a side view with further details;
- Fig. 9: a schematic representation of a further side view of the arrangement; and
- Fig. 10: a schematic representation of the arrangement in Fig. 9 with further details.

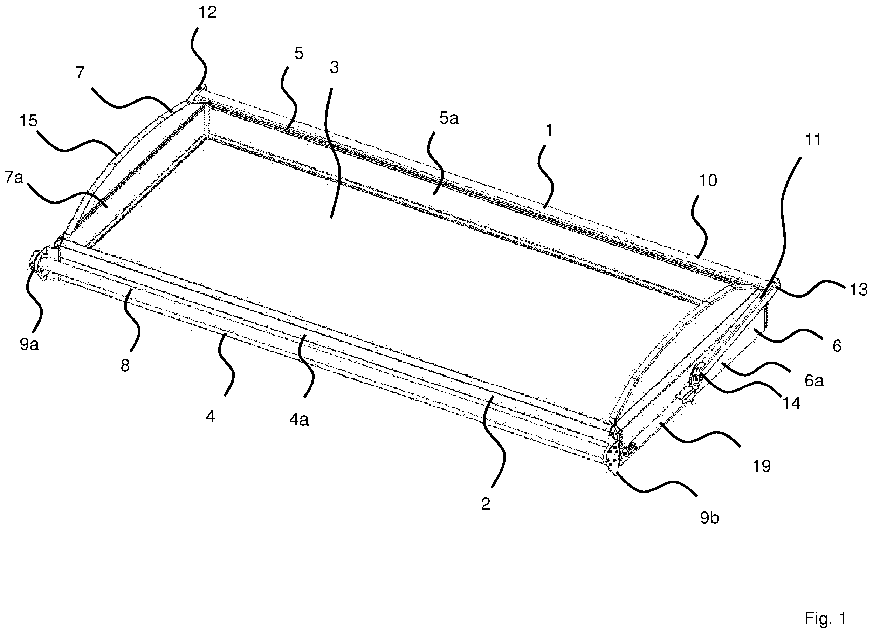

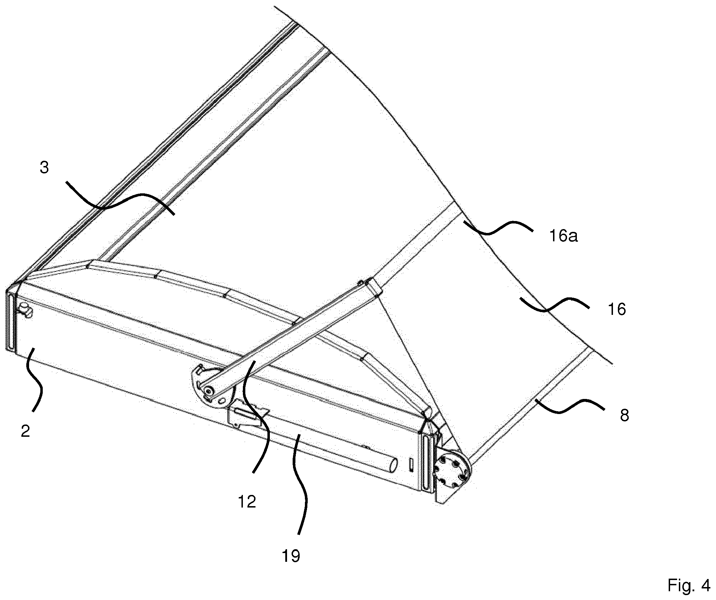

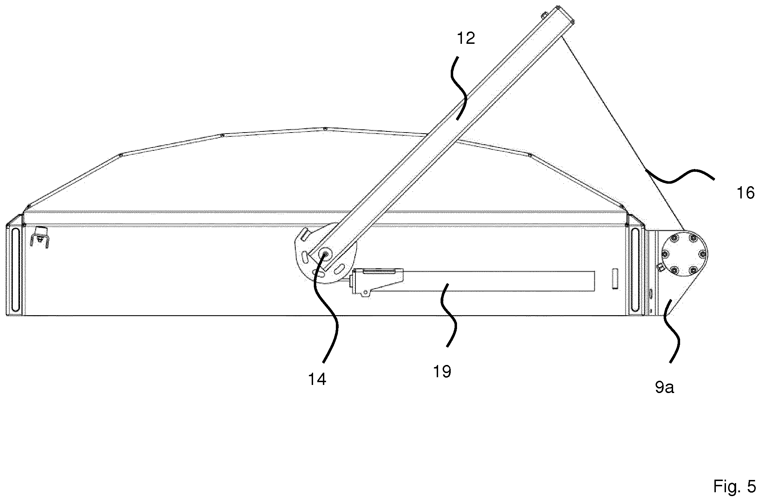

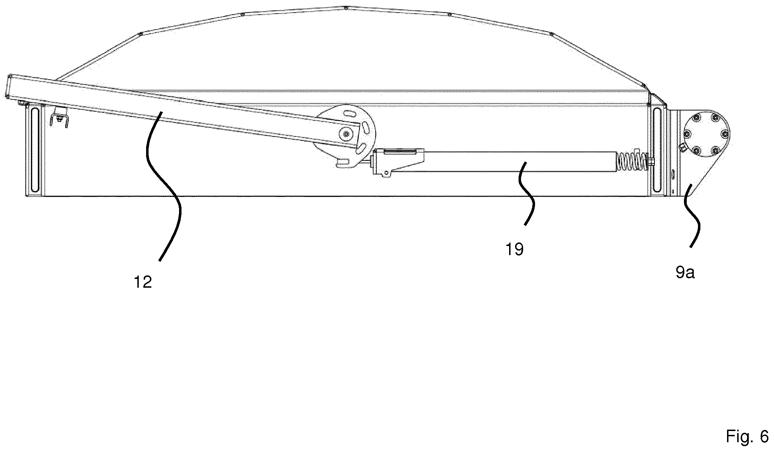

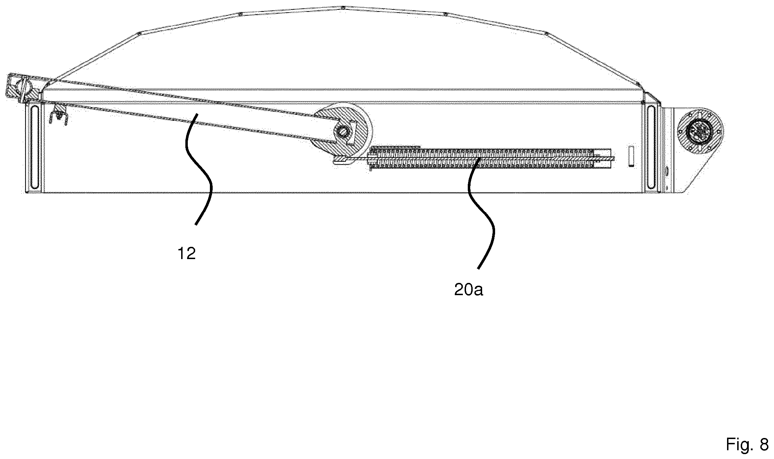

Following reference is made to Fig. 1 to 10 showing embodiments of an arrangement comprising a powered sheet cover apparatus 1 for a load space in a load container of an agricultural machine, which, for example, is a spreader, a seeder, or a loader wagon. The agricultural machine (not shown) is provided with a load space for receiving some material such as mineral or organic fertilizer, seeding material, or, in case of a loader wagon, for example, crop material which is to be carried in the load container.

According to the embodiments shown in the Fig. 1 to 10, the arrangement shown comprises a support frame 2. The support frame 2 encircles a top opening 3 which is, according to the embodiments shown, provided with a shape essentially rectangular. The support frame 2 comprises on opposing sides 4, 5 walls 4a, 5a. Further, on opposing end sides 6, 7 there are walls 6a, 7a.

For the embodiments shown in the Fig. 1 to 10, the support frame 2 will be provided on the top of walls of the load container (not shown) of the agricultural machine. The support frame may be releasable or non-releasable connected to the load container which may be extended by the support frame 2. In an alternative embodiment, the walls 4a, ..., 7a may directly provide for the walls of the load container, thereby, being provided by one- or single-piece walls. In such embodiment, there is no support frame 2 separated from or connected to the side walls of the load container. For the sake of simplicity, in the following reference is made to the walls 4a, ..., 7a on the opposing sides 4, 5 and the opposing end sides 6, 7.

Referring to Fig. 1, on one side 4 of the opposing sides 4, 5 a first support member 8 is located. The first support member 8 is located in a fixed position with regard to the wall 4a by means of attaching elements 9a, 9b mounted on the support frame 2, for example, by a screw connection. The attaching elements 9a, 9b, in an alternative embodiment, may be provided by a one piece wall element of the support frame 2.

On another or opposing side 5 of the opposing sides 4, 5, as shown in Fig. 1, a second support member 10 is provided. The first and the second support member 8, 10 both are extending essentially parallel to the opposing sides 4, 5 over the length of the walls 4a, 5a on the opposing sides 4, 5.

The second support member 10 is connected to a support device 11 provided with support arms 12, 13 on both end sides 6, 7. The support arms 12, 13 are pivotably received in a pivot point 14, 15 each provided essentially in a middle section of the opposing end sides 6, 7. The support arms 12, 13 are pivotable for moving the second support member 10 between an end position shown in Fig. 1 and an opposing end position (not shown) in which the second support member 10 is positioned adjacent to the first support member 8.

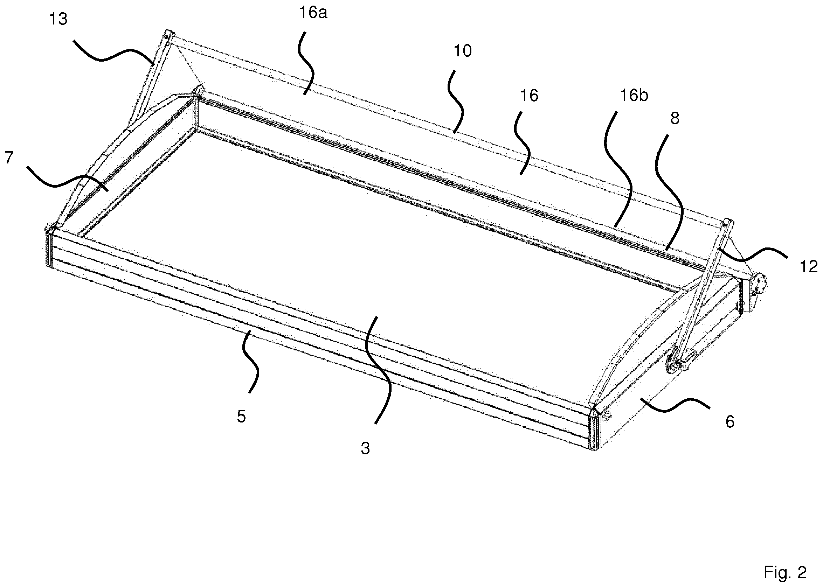

Referring to Fig. 2, the first and second support member 8, 10 are connected to a proximal and a distal side 16a, 16b, respectively, of a sheet cover 16.

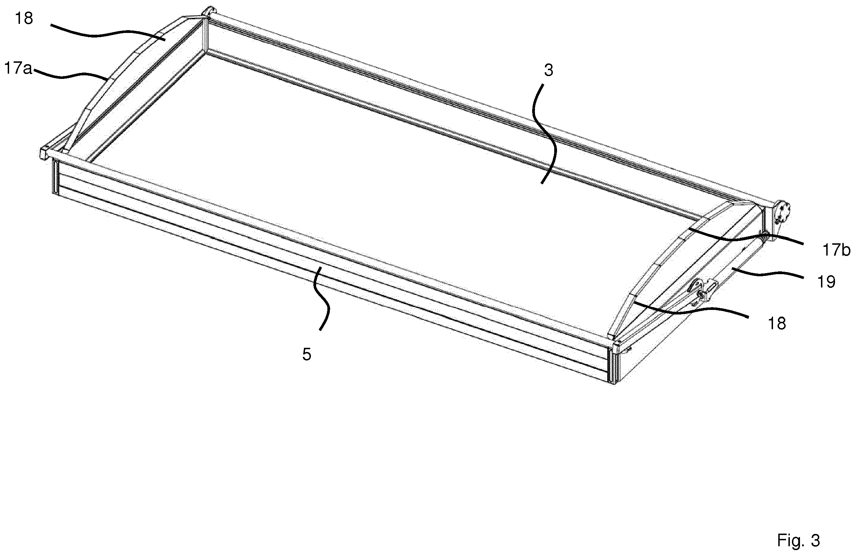

Fig. 3 shows a different view of the arrangement in Fig. 1. The cover sheet 16 is not shown for simplification.

For supporting the cover sheet 16 support sections 17a, 17b are provided on a rim 18 on both opposing end sides 6, 7.

By means of a biasing apparatus 19 a biasing force is applied to the support arms 12, 13, thereby, biasing the support arms 12, 13 against the movement into the end position in which the second support member 10 is located adjacent to the first support member 8 for uncovering the top opening 3.

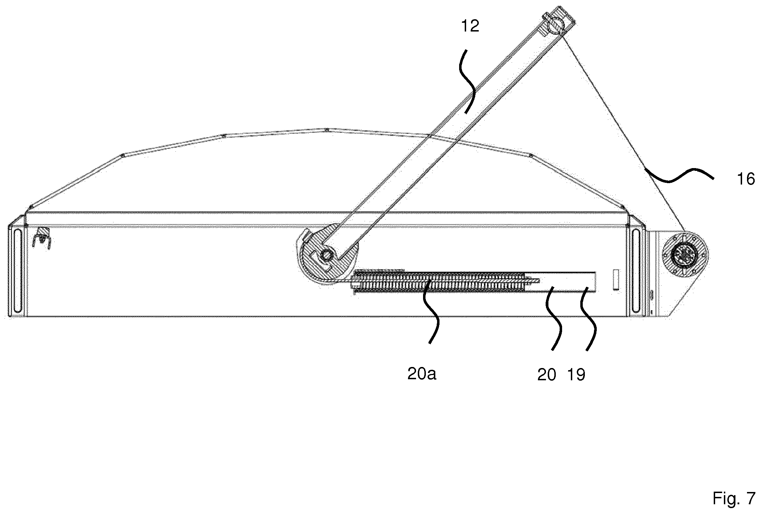

Further details with regard to the biasing apparatus 19 are shown in Fig. 7 to 8. The biasing apparatus 19, according to the embodiments shown, is provided with a biasing element 20 comprising a spring 20a. The biasing apparatus 19 is providing the biasing force in an essential horizontal direction. The biasing force is decreasing when the support arms 12, 13 are moved from the end position into the opposing end position (see Fig. 1 and 3).

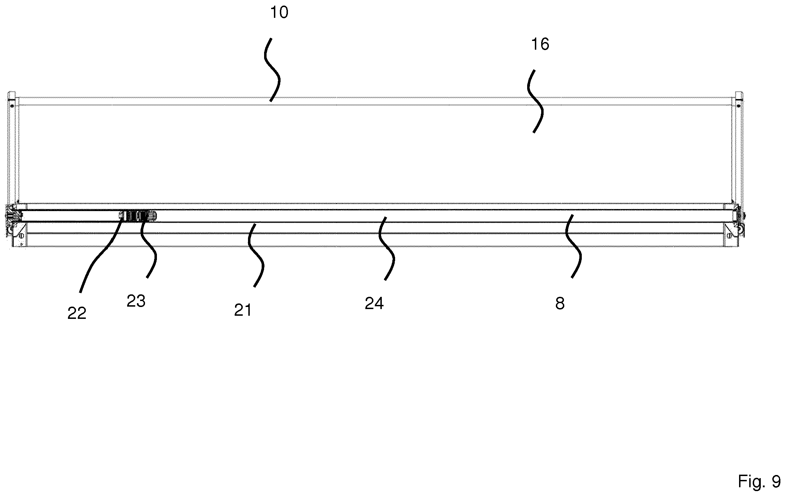

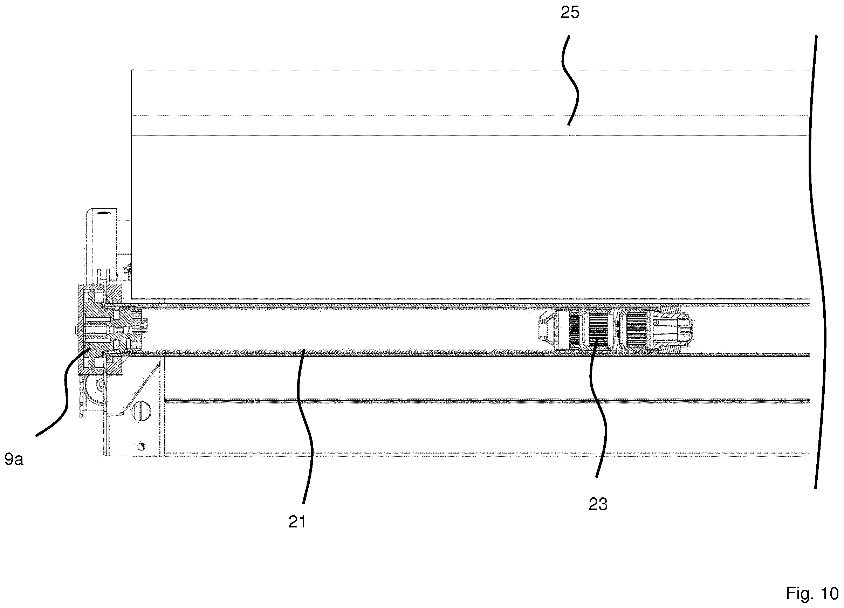

Referring to Fig. 9 and 10, the first support member 8 is comprising a roll 21 connected to a powered driving device 22 in such a way that the rotation of the roll 21 causes the sheet cover 16 to roll and unroll from the roll 21 while the second support member 10 is moving between the opposing sides 4, 5 for covering and uncovering the top opening 3. A driving motor 23 of the powered driving device 22 is received in an inner space 24 of the roll.

One or more traversing support elements 25 are embedded in the sheet cover 16 or provided on the sheet cover 16.

## Claims

1. An arrangement having a powered sheet cover apparatus and a load space for an agricultural machine, comprising
- a load space defined in a load container by walls (4a, 5a) on opposing sides (4, 5) and walls (6a, 7a) on opposing end sides (6, 7);
- a sheet cover (16) configured to cover a top opening (3) of the load space;
- a first support member (8) connected to the sheet cover (16) on a proximal side of the sheet cover (16) and extending essentially parallel to the walls (4a, 5a) on the opposing sides (4, 5), wherein the first support member (8) is provided in at least one fixed position with regard to an adjacent wall on one of the opposing sides of the load container;
- a second support member (10) connected to the sheet cover (16) on a distal side of the sheet cover (16) and extending essentially parallel to the walls (4a, 5a) on the opposing sides (4, 5);
- a support device (12, 13) provided on the walls (4a, ..., 7a) of the load container and connected to the second support member (10) in such a way that the second support member (10) is movable between the opposing sides (4, 5) for covering and uncovering the top opening (3) by the sheet cover (16);
- a powered driving device (22) connected to a roll (21) of the first support member (8) in such a way that rotation of the roll (21) causes the sheet cover (16) to roll and unroll from the roll (21) while the second support member (10) is moving between the opposing sides (4, 5) for covering and uncovering the top opening (3), the powered driving device (22) being provided with a driving motor (23) received in an inner space (24) of the roll (21); and
- a biasing apparatus (19) connected to the support device in such a way that a biasing force provided by the biasing apparatus (19) is applied to the support device for biasing the support device against movement between the opposing sides (4, 5).

2. The arrangement according to claim 1, wherein the support device is connected to opposing ends of the second support member (10) on the opposing sides.

3. The arrangement according to claim 1 or 2, wherein the support device comprises a support arm (12; 13) connected to the second support member (10) and pivotably received on the walls (6a, 7a) on the opposing end sides (6, 7), the support arm (12; 13) being pivotable between an end position in which the second support member (10) is positioned on one of the opposing sides (4) for uncovering the top opening (3) cover and an opposing end position in which the second support member (10) is positioned on the other one of the opposing sides (5) for covering the top opening (3) by the sheet cover (16).

4. The arrangement according to claim 3, wherein the biasing apparatus (19) is connected to the support arm (12; 13) biasing the support arm (12; 13) against rotation for relocating the second support member (10) into the end position for uncovering the top opening (3).

5. The arrangement according to claim 4, wherein the biasing apparatus (19) is free of a functional connection to the powered driving device (22).

6. The arrangement according to at least one of the preceding claims, wherein the biasing force is provided with an essential horizontal effective force direction.

7. The arrangement according to at least one of the preceding claims, wherein the biasing apparatus (19) is selected from the following group: mechanical biasing apparatus, hydraulic biasing apparatus, pneumatic biasing apparatus, and electrical biasing apparatus.

8. The arrangement according to at least one of the preceding claims, wherein the biasing apparatus (19) comprises a biasing element (20) at least in part providing the biasing force extending in an essentially horizontal direction.

9. The arrangement according to at least one of the preceding claims, wherein the biasing apparatus (19) is provided outside the load space.

10. The arrangement according to at least one of the preceding claims, wherein the support device is provided outside the load space.

11. The arrangement according to at least one of the preceding claims, further comprising a support section (17a; 17b) on the walls (6a, 7a) on the opposing end sides (6, 7), the support section (17a; 17b) supporting the sheet cover (16) when the sheet cover is covering the top opening (3) of the load space.

12. The arrangement according to at least one of the preceding claims, wherein the sheet cover (16) comprises one or more traversing support elements embedded in a sheet material.

13. The arrangement according to at least one of the preceding claims, further comprising a lock mechanism connected to the second support member (10) in such a way that the second support member (10) is secured at least in the opposing end position for covering the top opening (3).

14. An agricultural machine, comprising an arrangement according to at least one of the preceding claims, the agricultural machine being selected from the following group: spreader, seeder, and loader wagon.

## Patentansprüche

1. Anordnung aufweisend eine motorbetriebene Planenabdeckungsvorrichtung und einen Laderaum für eine landwirtschaftliche Maschine, aufweisend
- einen Laderaum, welcher in einem Ladebehälter durch Wände (4a, 5a) an gegenüberliegenden Seiten (4, 5) und Wände (6a, 7a) an gegenüberliegenden Stirnseiten (6, 7) definiert ist;
- eine Abdeckplane (16), welche dafür eingerichtet ist, eine obere Öffnung (3) des Laderaums abzudecken;
- ein erstes Trägerelement (8), welches mit der Abdeckplane (16) an einer proximalen Seite der Abdeckplane (16) verbunden ist und sich im Wesentlichen parallel zu den Wänden (4a, 5a) an den gegenüberliegenden Seiten (4, 5) erstreckt, wobei das erste Trägerelement (8) in mindestens einer festen Position in Bezug auf eine angrenzende Wand an einer der gegenüberliegenden Seiten des Ladebehälters bereitgestellt ist;
- ein zweites Trägerelement (10), welches mit der Abdeckplane (16) an einer distalen Seite der Abdeckplane (16) verbunden ist und sich im Wesentlichen parallel zu den Wänden (4a, 5a) an den gegenüberliegenden Seiten (4, 5) erstreckt;
- eine Trageinrichtung (12, 13) bereitgestellt an den Wänden (4a, ..., 7a) des Ladebehälters und derart mit dem zweiten Trägerelement (10) verbunden, dass das zweite Trägerelement (10) zwischen den gegenüberliegenden Seiten (4, 5) zum Abdecken und Aufdecken der oberen Öffnung (3) durch die Abdeckplane (16) beweglich ist;
- eine motorbetriebene Antriebsvorrichtung (22), welche mit einer Rolle (21) des ersten Trägerelements (8) auf eine solche Weise verbunden ist, dass eine Drehung der Rolle (21) bewirkt, dass sich Abdeckplane (16) auf die Rolle (21) auf- beziehungsweise von der Rolle (21) abgerollt wird, während sich das zweite Trägerelement (10) zwischen den gegenüberliegenden Seiten (4, 5) bewegt, um die obere Öffnung (3) abzudecken und aufzudecken, wobei die motorbetriebene Antriebsvorrichtung (22) mit einem Antriebsmotor (23), welcher in einem inneren Raum (24) der Rolle (21) aufgenommen ist, versehen ist; und
- eine Vorspannvorrichtung (19), welche mit der Trageinrichtung auf eine solche Weise verbunden ist, dass eine Vorspannkraft, welche durch die Vorspannvorrichtung (19) bereitgestellt wird, auf die Trageinrichtung ausgeübt wird, um die Trageinrichtung gegen eine Bewegung zwischen den gegenüberliegenden Seiten (4, 5) vorzuspannen.

2. Anordnung nach Anspruch 1, wobei die Trageinrichtung an gegenüberliegenden Seiten mit den gegenüberliegenden Enden des zweiten Trägerelements (10) verbunden ist.

3. Anordnung nach Anspruch 1 oder 2, wobei die Trageinrichtung einen Tragarm (12; 13), welcher mit dem zweiten Trägerelement (10) verbunden und schwenkbar an den Wänden (6a, 7a) an den gegenüberliegenden Stirnseiten (6, 7) aufgenommen ist, aufweist, wobei der Tragarm (12; 13) zwischen einer Endposition, in welcher das zweite Trägerelement (10) zum Aufdecken der oberen Öffnung (3) an einer der gegenüberliegenden Seiten (4) angeordnet ist, und einer gegenüberliegenden Endposition, in welcher das zweite Trägerelement (10) an der anderen Seite der gegenüberliegenden Seiten (5) zum Abdecken der oberen Öffnung (3) durch die Abdeckplane (16) angeordnet ist, schwenkbar ist.

4. Anordnung nach Anspruch 3, wobei die Vorspannvorrichtung (19) derart mit dem Tragarm (12; 13) verbunden ist, dass sie den Tragarm (12; 13) gegen eine Drehung zum Verlagern des zweiten Trägerelements (10) in die Endposition zum Aufdecken der oberen Öffnung (3) vorspannt.

5. Anordnung nach Anspruch 4, wobei die Vorspannvorrichtung (19) keine funktionale Verbindung zur motorbetriebenen Antriebsvorrichtung (22) aufweist.

6. Anordnung nach mindestens einem der vorstehenden Ansprüche, wobei die Vorspannkraft in einer im Wesentlichen horizontalen Kraftwirkrichtung bereitgestellt ist.

7. Anordnung nach mindestens einem der vorstehenden Ansprüche, wobei die Vorspannvorrichtung (19) aus der folgenden Gruppe ausgewählt ist: mechanische Vorspannvorrichtung, hydraulische Vorspannvorrichtung, pneumatische Vorspannvorrichtung und elektrische Vorspannvorrichtung.

8. Anordnung nach mindestens einem der vorstehenden Ansprüche, wobei die Vorspannvorrichtung (19) ein Vorspannelement (20) aufweist, welches mindestens zum Teil die Vorspannkraft bereitstellt, welche in einer im Wesentlichen horizontalen Richtung wirkt.

9. Anordnung nach mindestens einem der vorstehenden Ansprüche, wobei die Vorspannvorrichtung (19) außerhalb des Laderaums bereitgestellt ist.

10. Anordnung nach mindestens einem der vorstehenden Ansprüche, wobei die Trageinrichtung außerhalb des Laderaums bereitgestellt ist.

11. Anordnung nach mindestens einem der vorstehenden Ansprüche, ferner aufweisend einen Tragabschnitt (17a; 17b) an den Wänden (6a, 7a) an den gegenüberliegenden Stirnseiten (6, 7), wobei der Tragabschnitt (17a; 17b) die Abdeckplane (16) trägt, wenn die Abdeckplane die obere Öffnung (3) des Laderaums abdeckt.

12. Anordnung nach mindestens einem der vorstehenden Ansprüche, wobei die Abdeckplane (16) ein oder mehrere Querträgerelemente eingebettet in ein Planenmaterial aufweist.

13. Anordnung nach mindestens einem der vorstehenden Ansprüche, ferner aufweisend einen Verriegelungsmechanismus, welcher auf eine derartige Weise mit dem zweiten Trägerelement (10) verbunden ist, dass das zweite Trägerelement (10) mindestens in der gegenüberliegenden Endposition zum Abdecken der oberen Öffnung (3) gesichert ist.

14. Landwirtschaftliche Maschine, aufweisend eine Anordnung nach mindestens einem der vorstehenden Ansprüche, wobei die landwirtschaftliche Maschine aus der folgenden Gruppe ausgewählt ist: Streuvorrichtung, Sävorrichtung und Ladewagen.

## Revendications

1. Système ayant un appareil motorisé de feuille de recouvrement et un espace de chargement pour une machine agricole, comprenant :
- un espace de chargement défini dans un conteneur de chargement par des parois (4a, 5a) sur des côtés opposés (4, 5) et des parois (6a, 7a) sur des côtés d'extrémité opposés (6, 7) ;
- une feuille de recouvrement (16) configurée pour couvrir une ouverture supérieure (3) de l'espace de chargement ;
- un premier élément de support (8) relié à la feuille de recouvrement (16) sur un côté proximal de la feuille de recouvrement (16) et s'étendant sensiblement parallèlement aux parois (4a, 5a) sur les côtés opposés (4, 5), dans lequel le premier élément de support (8) est fourni dans au moins une position fixe par rapport à une paroi adjacente sur l'un des côtés opposés du conteneur de chargement ;
- un deuxième élément de support (10) relié à la feuille de recouvrement (16) sur un côté distal de la feuille de recouvrement (16) et s'étendant sensiblement parallèlement aux parois (4a, 5a) sur les côtés opposés (4, 5) ;
- un dispositif de support (12, 13) fourni sur les parois (4a, ..., 7a) du conteneur de chargement et relié au deuxième élément de support (10) de manière à ce que le deuxième élément de support (10) est mobile entre les côtés opposés (4, 5) pour couvrir et découvrir l'ouverture supérieure (3) grâce à la feuille de recouvrement (16) ;
- un dispositif d'entraînement motorisé (22) relié à un rouleau (21) du premier élément de support (8) de manière à ce que la rotation du rouleau (21) fait en sorte que la feuille de recouvrement (16) s'enroule sur le rouleau (21), et se déroule à partir de celui-ci, alors que le deuxième élément de support (10) se déplace entre les côtés opposés (4, 5) pour couvrir et découvrir l'ouverture supérieure (3), le dispositif d'entraînement motorisé (22) étant doté d'un moteur d'entraînement (23) réceptionné dans un espace intérieur (24) du rouleau (21) ; et
- un appareil de sollicitation (19) relié au dispositif de support de manière à ce qu'une force de sollicitation fournie par l'appareil de sollicitation (19) soit appliquée au dispositif de support pour solliciter le dispositif de support à l'encontre d'un déplacement entre les côtés opposés (4, 5).

2. Système selon la revendication 1, dans lequel le dispositif de support est relié à des extrémités opposées du deuxième élément de support (10) sur les côtés opposés.

3. Système selon la revendication 1 ou 2, dans lequel le dispositif de support comprend un bras de support (12 ; 13) relié au deuxième élément de support (10) et reçu de manière pivotante sur les parois (6a, 7a) sur les côtés d'extrémité opposés (6, 7), le bras de support (12 ; 13) pouvant pivoter entre une position finale où le deuxième élément de support (10) est positionné sur l'un des côtés opposés (4) pour découvrir le recouvrement de l'ouverture supérieure (3) et une position finale opposée où le deuxième élément de support (10) est positionné sur l'autre des côtés opposés (5) pour couvrir l'ouverture supérieure (3) grâce à la feuille de recouvrement (16).

4. Système selon la revendication 3, dans lequel l'appareil de sollicitation (19) est relié au bras de support (12 ; 13) sollicitant le bras de support (12 ; 13) à l'encontre de la rotation pour relocaliser le deuxième élément de support (10) dans la position finale pour découvrir l'ouverture supérieure (3).

5. Système selon la revendication 4, dans lequel l'appareil de sollicitation (19) est libre d'une connexion fonctionnelle avec le dispositif d'entraînement motorisé (22).

6. Système selon l'une au moins des revendications précédentes, dans lequel la force de sollicitation est fournie avec une direction de force effective sensiblement horizontale.

7. Système selon l'une au moins des revendications précédentes, dans lequel l'appareil de sollicitation (19) est sélectionné dans le groupe suivant : un appareil de sollicitation mécanique, un appareil de sollicitation hydraulique, un appareil de sollicitation pneumatique, et un appareil de sollicitation électrique.

8. Système selon l'une au moins des revendications précédentes, dans lequel l'appareil de sollicitation (19) comprend un élément de sollicitation (20) fournissant au moins en partie la force de sollicitation s'étendant dans une direction sensiblement horizontale.

9. Système selon l'une au moins des revendications précédentes, dans lequel l'appareil de sollicitation (19) est fourni à l'extérieur de l'espace de chargement.

10. Système selon l'une au moins des revendications précédentes, dans lequel le dispositif de support est fourni à l'extérieur de l'espace de chargement.

11. Système selon l'une au moins des revendications précédentes, comprenant en outre une section de support (17a ; 17b) sur les parois (6a, 7a) sur les côtés d'extrémité opposés (6, 7), la section de support (17a ; 17b) supportant la feuille de recouvrement (16) lorsque la feuille de recouvrement recouvre l'ouverture supérieure (3) de l'espace de chargement.

12. Système selon l'une au moins des revendications précédentes, dans lequel la feuille de recouvrement (16) comprend un ou plusieurs éléments de support traversants noyés dans un matériau de feuille.

13. Système selon l'une au moins des revendications précédentes, comprenant en outre un mécanisme de verrouillage relié au deuxième élément de support (10) de manière à ce que le deuxième élément de support (10) soit fixé au moins dans la position finale opposée pour couvrir l'ouverture supérieure (3).

14. Machine agricole, comprenant un système selon l'une au moins des revendications précédentes, la machine agricole étant sélectionnée dans le groupe suivant : un épandeur, un semoir, et une remorque autochargeuse.
